# EUROPEAN PATENT APPLICATION

(11) **EP 4 622 076 A1**
(43) Date of publication of application: **24.09.2025**
(21) Application number: 25162781.6
(22) Date of filing: 11.03.2025
(51) Int. Cl.: H02K 15/035, H02K 15/121

(54) **ROTATING ELECTRICAL MACHINE ROTOR MANUFACTURING METHOD AND ROTATING ELECTRICAL MACHINE ROTOR**

(30) Priority: 22.03.2024 JP 2024046501
(71) Applicant: Aisin Corporation, Aichi 448-8650 (JP)
(72) Inventor: YAMADA, Minami, Kariya, 448-8650 (JP)
(74) Representative: Kramer Barske Schmidtchen Patentanwälte PartG mbB

(57) **Abstract**

A rotating electrical machine rotor manufacturing method including
a step of providing a first core (W1) and a second core (W2), each having an axis and a magnet arrangement hole (322W),
a first setting step of setting the first core (W1) on a molding device (20A),
a first filling step of, after the first setting step, filling the magnet arrangement hole (322W) of the first core (W1) with an injection molding material (71, 72) including magnetic powder,
a second setting step of, after the first filling step, setting the second core (W2) together with the first core (W1) on the molding device (20A) in a state where the second core (W2) is adjacent to the first core (W1) in an axial direction, and
a second filling step of, after the second setting step, filling the magnet arrangement hole (322W) of the second core (W2) with the injection molding material (71, 72).

## Description

### TECHNICAL FIELD

This disclosure relates to a rotating electrical machine rotor manufacturing method, and a rotating electrical machine rotor.

### BACKGROUND DISCUSSION

A known rotating electrical machine rotor manufacturing method and a known rotating electrical machine rotor are disclosed in JP 2014-147142 A. There is known a technique of injection-molding a material for a bonded magnet obtained by mixing a magnetic material (magnetic powder) and a non-magnetic resin material (binder) in magnet arrangement holes in a rotor core.

Meanwhile, if an axial length of a rotor core is relatively long, the axial length (flow length) at a time of injection-molding the bonded magnet is correspondingly long, making it difficult to form the bonded magnet.

Therefore, in one aspect, an object of this disclosure is to make it possible to form a bonded magnet with good quality even if an axial length of a rotor core is relatively long.

A need thus exists for a rotating electrical machine rotor manufacturing method and a rotating electrical machine rotor which are not susceptible to the drawback mentioned above.

### SUMMARY

In one aspect, there is provided a rotating electrical machine rotor manufacturing method including
a step of providing a first core and a second core, each having an axis and a magnet arrangement hole,
a first setting step of setting the first core on a molding device,
a first filling step of, after the first setting step, filling the magnet arrangement hole of the first core with an injection molding material including magnetic powder,
a second setting step of, after the first filling step, setting the second core together with the first core on the molding device in a state where the second core is adjacent to the first core in an axial direction, and
a second filling step of, after the second setting step, filling the magnet arrangement hole of the second core with the injection molding material.

In one aspect, according to this disclosure, it is possible to form a bonded magnet with good quality even if an axial length of a rotor core is relatively long.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic view showing a rotating electrical machine rotor manufacturing apparatus according to a first embodiment;
Fig. 2 is a schematic flowchart showing a flow of a rotating electrical machine rotor manufacturing method according to the first embodiment;
Fig. 3 is an explanatory view of a step (S200) in the manufacturing method according to the first embodiment;
Fig. 4 is an explanatory view of a step (S201) in the manufacturing method according to the first embodiment;
Fig. 5 is an explanatory view of a step (S202) in the manufacturing method according to the first embodiment;
Fig. 6 is an explanatory view of a step (S203) in the manufacturing method according to the first embodiment;
Fig. 7 is an explanatory view of a step (S204) in the manufacturing method according to the first embodiment;
Fig. 8 is an explanatory view of a step (S205) in the manufacturing method according to the first embodiment;
Fig. 9 is an explanatory view of a slide spacer according to the first embodiment;
Fig. 10 is an explanatory view of another variation of the slide spacer according to the first embodiment;
Fig. 11 is an explanatory view of a step (S206) in the manufacturing method according to the first embodiment;
Fig. 12 is an explanatory view of a step (S207) in the manufacturing method according to the first embodiment;
Fig. 13 is an explanatory view of a step (S208) in the manufacturing method according to the first embodiment;
Fig. 14 is an explanatory view of a step (S209) in the manufacturing method according to the first embodiment;
Fig. 15 is an explanatory view of a step (S210) in the manufacturing method according to the first embodiment;
Fig. 16 is an explanatory view of a step (S211) in the manufacturing method according to the first embodiment;
Fig. 17 is an explanatory view of an initialization step in the manufacturing method according to the first embodiment;
Fig. 18 is a schematic view showing a rotating electrical machine rotor manufacturing apparatus according to a second embodiment;
Fig. 19 is an explanatory view of a modification of the second embodiment, schematically showing a cross-sectional view similar to Fig. 18;
Fig. 20 is an explanatory view of a movable spacer according to the second embodiment, showing movement (each state) of the movable spacer in an axial view;
Fig. 21 is an explanatory view showing, along with an explanatory view of movement of a robot hand with respect to the movable spacer according to the second embodiment, another modification of the movable spacer;
Fig. 22 is an explanatory view showing another modification of the movable spacer according to the second embodiment;
Fig. 23 is a schematic flowchart showing a flow of a rotating electrical machine rotor manufacturing method according to the second embodiment;
Fig. 24 is an explanatory view of a step (S301) in the manufacturing method according to the second embodiment;
Fig. 25 is a view showing a gripping posture of the robot hand according to the second embodiment;
Fig. 26 is an explanatory view of a step (S302) in the manufacturing method according to the second embodiment;
Fig. 27 is an explanatory view of a step (S303) in the manufacturing method according to the second embodiment;
Fig. 28 is an explanatory view of a step (S304) in the manufacturing method according to the second embodiment;
Fig. 29 is an explanatory view of a step (S305) in the manufacturing method according to the second embodiment;
Fig. 30 is an explanatory view of a step (S306) in the manufacturing method according to the second embodiment;
Fig. 31 is an explanatory view of a step (S307) in the manufacturing method according to the second embodiment;
Fig. 32 is a further explanatory view of the step (S307) in the manufacturing method according to the second embodiment;
Fig. 33 is an explanatory view of a step (S308) in the manufacturing method according to the second embodiment;
Fig. 34 is an explanatory view of a step (S309) in the manufacturing method according to the second embodiment;
Fig. 35 is an explanatory view of a step (S310) in the manufacturing method according to the second embodiment;
Fig. 36 is a further explanatory view of the step (S310) in the manufacturing method according to the second embodiment;
Fig. 37 is an explanatory view of a step (S311) in the manufacturing method according to the second embodiment;
Fig. 38 is an explanatory view of a step (S312) in the manufacturing method according to the second embodiment;
Fig. 39 is an explanatory view of a step (S313) in the manufacturing method according to the second embodiment;
Fig. 40 is an explanatory view of a step (S314) in the manufacturing method according to the second embodiment;
Fig. 41 is an explanatory view of a step (S315) in the manufacturing method according to the second embodiment; and
Fig. 42 is a schematic cross-sectional view of a rotor core including a bonded magnet.

### DETAILED DESCRIPTION

Hereinafter, each embodiment will be described in detail with reference to the accompanying drawings. Note that dimension ratios in the drawings are merely examples and are not limited thereto, and shapes and the like in the drawings may be partially exaggerated for convenience of description. Furthermore, in the drawings, simply some of a plurality of parts having the same attribute may be denoted by reference signs for the sake of clarity.

Hereinafter, two embodiments will be also referred to as a first embodiment and a second embodiment, and will be described in order from the first embodiment.

### [First embodiment]

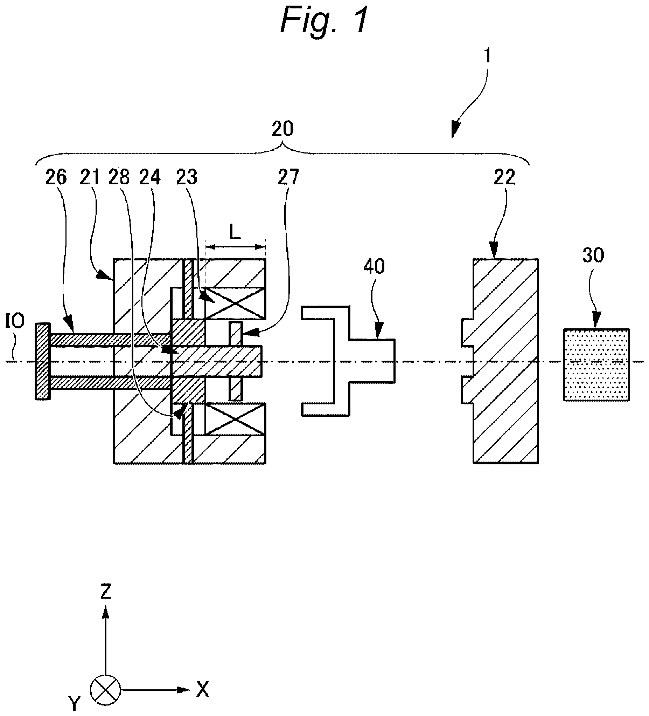

Fig. 1 is a schematic view showing a rotating electrical machine rotor manufacturing apparatus 1 according to a first embodiment. Fig. 1 shows a rotating electrical machine rotor manufacturing apparatus 1 in a cross-sectional view taken along a plane passing through a central axis I0. However, an injection molding machine 30 is schematically shown in a form of a block diagram.

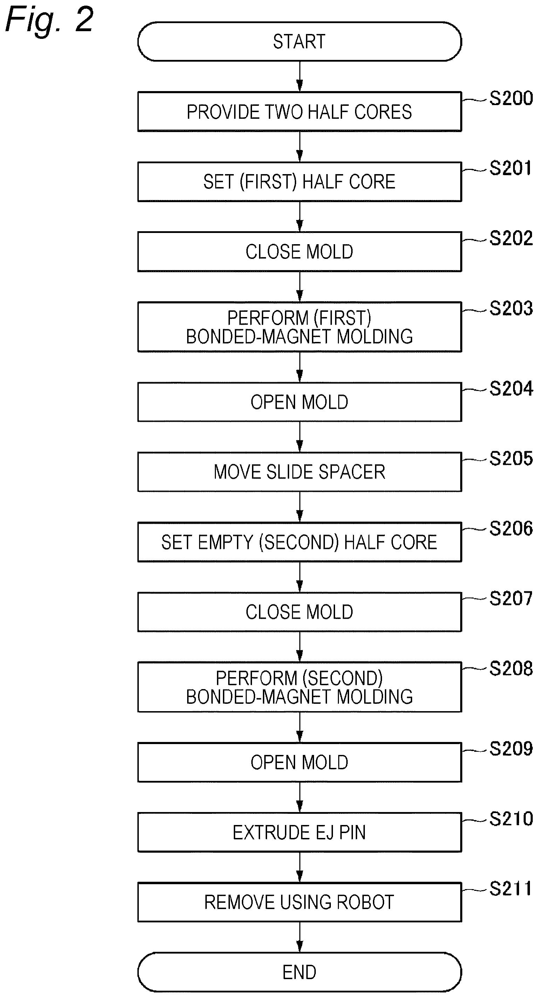

Fig. 1 shows a trimetric view in which three axes cross at right angles to each other in a right-handed coordinate system (similar applies to following Fig. 2 and the like). In the following description, directions may be appropriately represented in a trimetric view. In the following description, a Z direction is a vertical direction, and a positive Z direction is assumed to be on an upper side. An XY plane is assumed to be a horizontal plane. An X direction is assumed to be a direction parallel to the central axis I0, and is also referred to as an axial direction. Assuming a cylinder having the central axis I0 as a central axis thereof, terms "radial direction" and "circumferential direction" correspond to a radial direction and circumferential direction of the cylinder.

The rotating electrical machine rotor manufacturing apparatus 1 includes a molding device 20, the injection molding machine 30, and a robot hand 40.

The molding device 20 includes a movable mold 21, a fixed mold 22, an oriented magnetic field application device 23, a centering mechanism 24, an ejector pin 26, a movable spacer 27, and a slide spacer 28.

The movable mold 21 and the fixed mold 22 can be opened and closed in the X direction. In a modification, a molding device that can be opened and closed in the vertical direction may be used.

The fixed mold 22 may incorporate a gate or runner for injection molding. In this case, the fixed mold 22 forms an injection molding device together with the injection molding machine 30 described later.

The injection molding device allows the oriented magnetic field application device 23 to act on a bonded-magnet material injected into a magnet arrangement hole of a rotor core. The oriented magnetic field application device 23 can apply an oriented magnetic field to a set workpiece W (described later) of the rotor core. The oriented magnetic field acts on the bonded-magnet material injected in an injection molding step described later. That is, the oriented magnetic field has a role of orienting a magnet component in the bonded-magnet material and causing a cured material of the bonded-magnet material after curing to function as a permanent magnet (bonded magnet). Here, an axial length of an effective area of the alignment magnetic field by the oriented magnetic field application device 23 is assumed to be the same as an axial length L of the oriented magnetic field application device 23 in the drawing. The oriented magnetic field application device 23 is disposed around the central axis I0. The oriented magnetic field application device 23 may be provided integrally with the movable mold 21. That is, the movable mold 21 may support the oriented magnetic field application device 23 so as to be integrally movable with the oriented magnetic field application device 23.

The centering mechanism 24 has a function of centering the workpiece W (described later) with respect to the central axis I0. The centering mechanism 24 may have a cylindrical shape having an outer diameter corresponding to an axial hole (described later) of the workpiece W. In this case, the centering mechanism 24 can center the workpiece W with respect to the central axis I0 by passing through the axial hole of the workpiece W. The centering mechanism 24 may be provided integrally with the movable mold 21. That is, the movable mold 21 may support the centering mechanism 24 so as to be integrally movable with the centering mechanism 24.

The ejector pin 26 may be a mechanism originally provided in the molding device 20. The ejector pin 26 is movable in the axial direction with respect to the movable mold 21. The ejector pin 26 functions, for example, when the workpiece W is removed from the movable mold 21.

The movable spacer 27 functions as an axial spacer. The movable spacer 27 is movable in the axial direction with respect to the centering mechanism 24 (accordingly, the movable mold 21) while being centered by the centering mechanism 24. The movable spacer 27 may have an annular shape in an axial view. A function of the movable spacer 27 will be described later in connection with description of a manufacturing method described later.

Similarly to the movable spacer 27, the slide spacer 28 functions as an axial spacer. The slide spacer 28 is disposed at a position out of an axial range of the oriented magnetic field application device 23. The slide spacer 28 is movable in the radial direction with respect to the movable mold 21. The slide spacer 28 may be axially fixed to the movable mold 21. A function of the slide spacer 28 will be described later in connection with description of a manufacturing method described later.

Next, a rotating electrical machine rotor manufacturing method according to the present embodiment, the method using the rotating electrical machine rotor manufacturing apparatus 1, will be described with reference to Figs. 2 to 17.

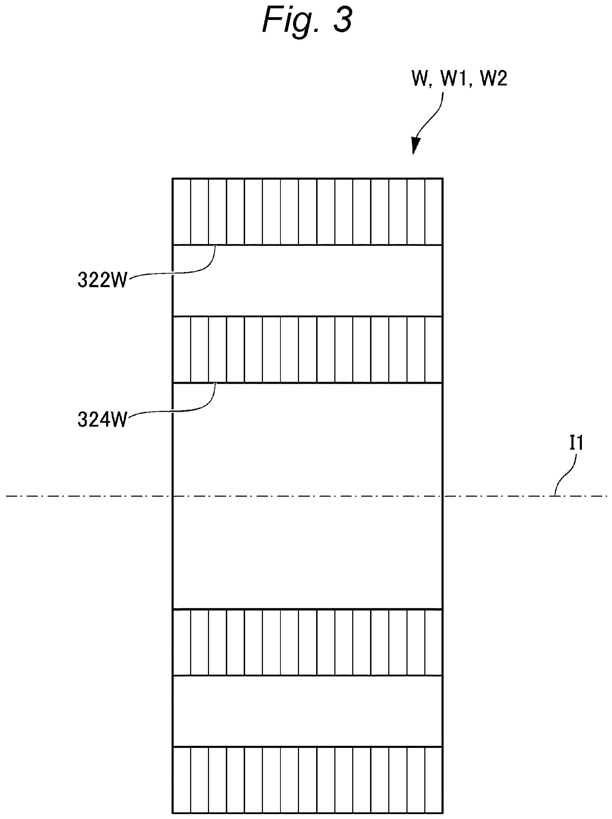

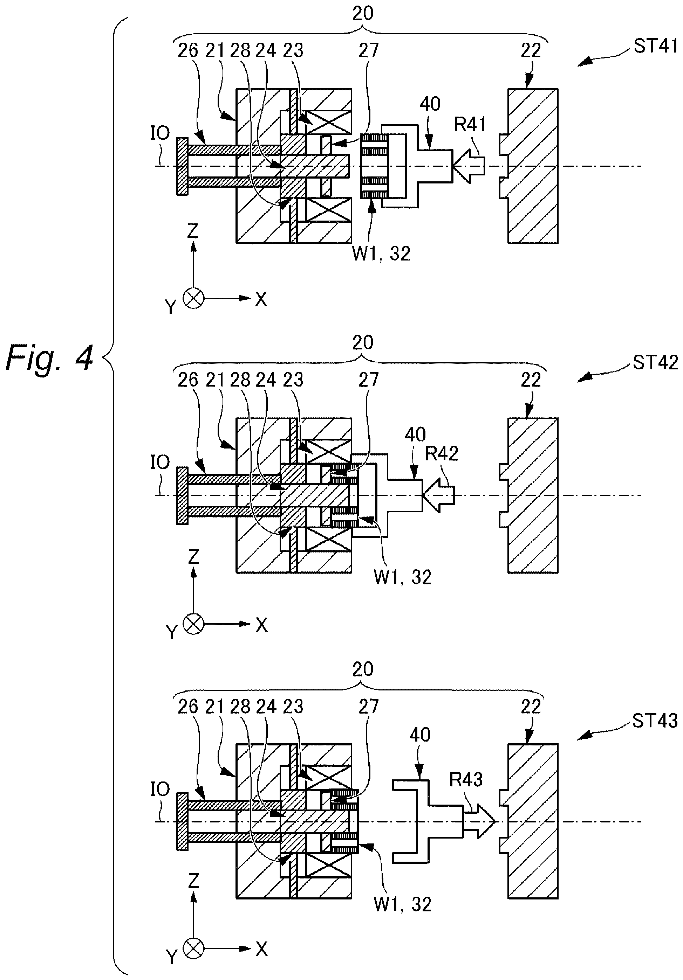

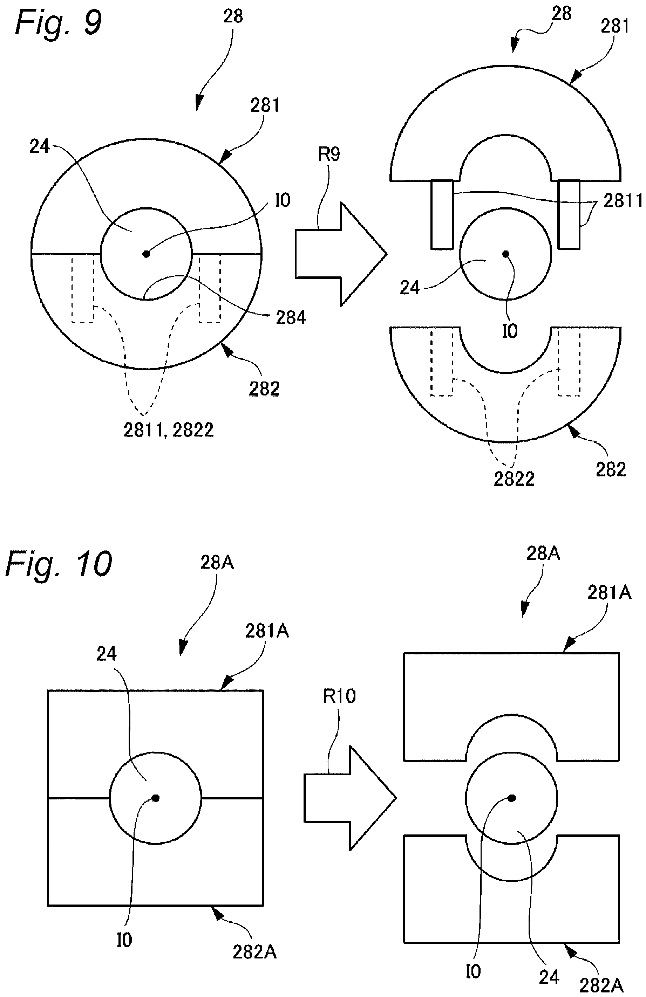

Fig. 2 is a schematic flowchart showing a flow of the rotating electrical machine rotor manufacturing method according to the present embodiment. Figs. 3 to 17 are explanatory views of each state in this manufacturing method. Fig. 3 is a side view of a workpiece W. Figs. 4 to 8 and Figs. 11 to 17 are side views showing a relation between the rotating electrical machine rotor manufacturing apparatus 1 and the workpieces W in a side view similar to Fig. 1. Fig. 9 is an explanatory view of the slide spacer 28, and is a view showing two states (positions) of the slide spacer 28 in the axial view. Fig. 10 is a view showing another variation of the slide spacer 28.

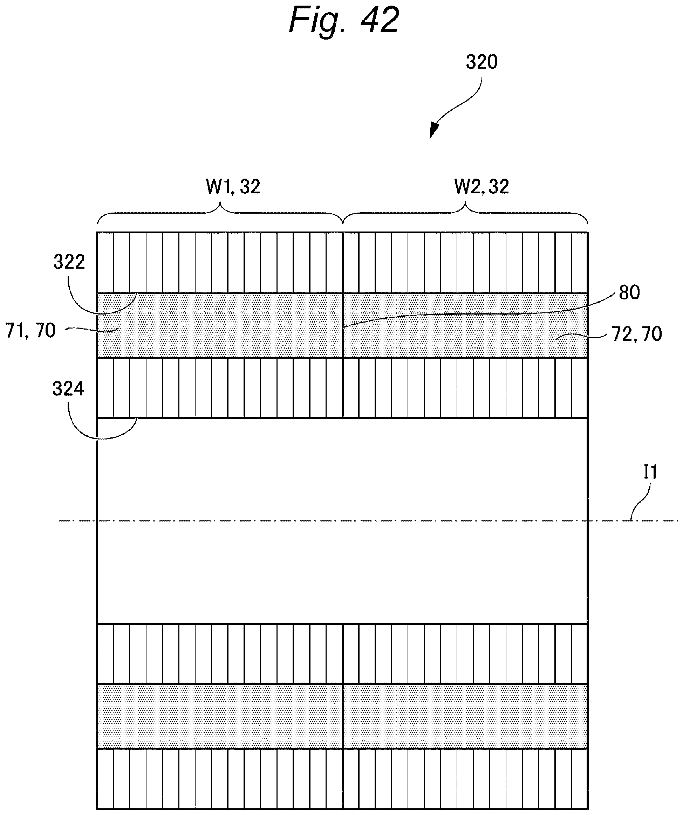

This manufacturing method first includes a step of providing two workpieces W for forming one rotor core (Step S200). In the present embodiment, one rotor core 320 (refer to Fig. 42) is formed by bonding two core parts in the axial direction (described later). The two workpieces W correspond to two core parts. Hereinafter, the two workpieces W are referred to as half cores W1 and W2 when distinguished from each other. The half cores W1 and W2 have identical configurations, but may have different configurations (for example, may have different axial lengths) in the modification. Fig. 3 shows an example of a workpiece W in the cross-sectional view. The workpiece W includes an axial hole 324W corresponding to an axial hole 324 (refer to Fig. 42) of the rotor core 320 and a magnet arrangement hole 322W corresponding to a magnet arrangement hole 322 (refer to Fig. 42) of the rotor core 320.

Next, this manufacturing method includes a step of setting a first half core W1 on the molding device 20 (Step S201). Fig. 4 shows explanatory views of this step in a chronological order from top. The half core W1 is gripped by the robot hand 40 (ST41) and transferred to the molding device 20 (refer to arrow R41). Then, the half core W1 is set on the molding device 20 so as to be centered by the centering mechanism 24 (ST42). That is, the robot hand 40 is centered by the centering mechanism 24, by pushing the half core W1 in a negative X direction (refer to arrow R42). Thus, the central axis I0 of the centering mechanism 24 and a central axis I1 of the half core W1 coincide with each other. At this time, the half core W1 is set on the molding device 20 while no bonded magnet is formed in the magnet arrangement hole 322W (that is, the magnet arrangement hole 322W is empty). Thereafter, the robot hand 40 retracts in a direction away from the movable mold 21 (refer to arrow R43) after releasing the half core W1 (ST43).

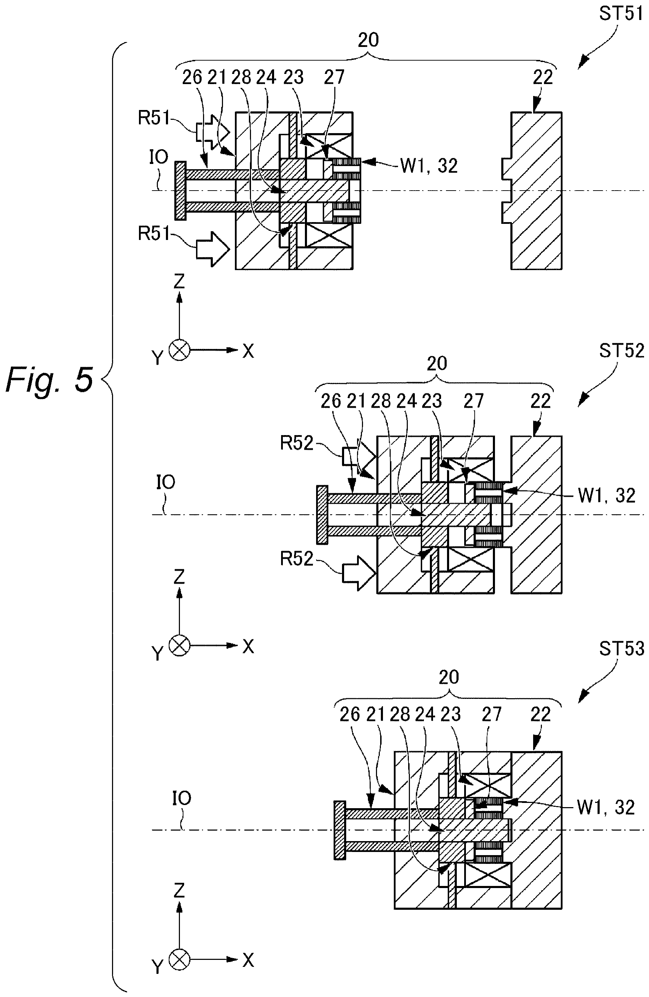

Next, this manufacturing method includes a step of forming a closed mold state of the molding device 20 while the first half core W1 is set (Step S202). In this case, when the movable mold 21 moves in a positive X direction (refer to arrows R51 to R53), a closed mold state (ST53) is formed from an open mold state (ST51 in Fig. 5) through an intermediate state ST52. In the closed mold state (ST53), the half core W1 is axially sandwiched between the movable mold 21 and the fixed mold 22 via the movable spacer 27 and the slide spacer 28.

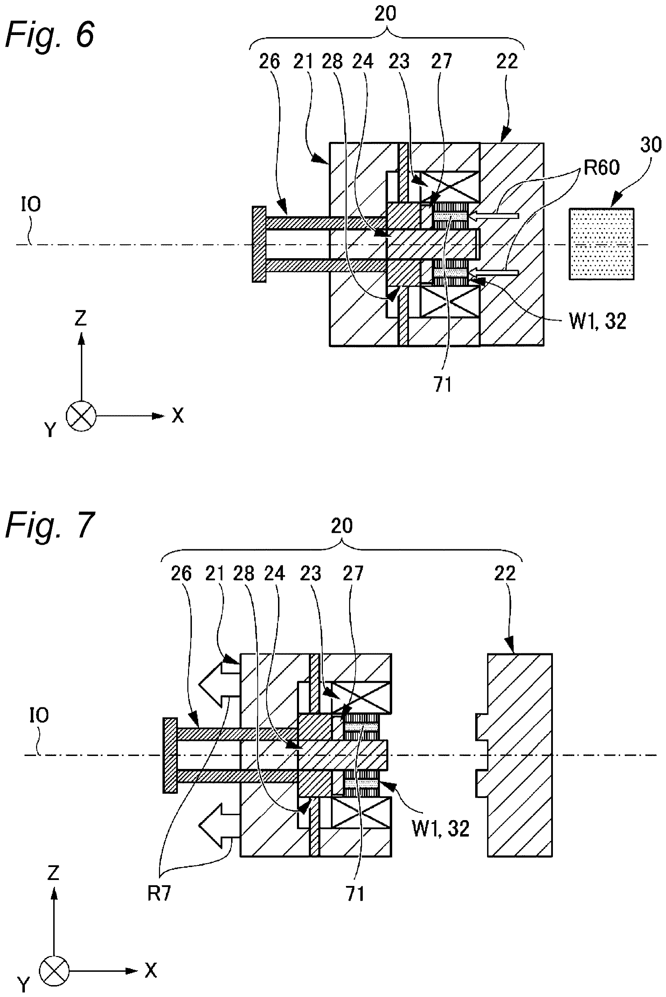

Next, this manufacturing method includes a bonded-magnet molding step for the first half core W1 (Step S203). The bonded-magnet molding step may be performed in a state where mold clamping force is generated. This step is achieved by injection-molding a material for the bonded magnet (hereinafter, also simply referred to as a "bonded-magnet material") obtained by mixing magnetic powder and a binder, by using the injection molding machine 30 and the gate in the fixed mold 22. A method for the injection molding is arbitrary, and may include, for example, transfer molding, resin injection by compression molding using a cylinder, and the like. The runner may be of any type such as a cold runner type or a hot runner type. The magnet arrangement hole 322W of the half core W1 is filled with the bonded-magnet material. Fig. 6 shows a bonded-magnet material 71 that fills the half core W1 (refer to arrows R60). The bonded-magnet material 71 contains, for example, a thermoplastic resin material, and when the magnet arrangement hole 322W of the half core W1 is filled with the bonded-magnet material 71, the bonded-magnet material is gradually cured.

The bonded-magnet molding step for the first half core W1 (Step S203) is performed in a state where the oriented magnetic field is formed by the oriented magnetic field application device 23. In the bonded-magnet molding step for the first half core W1 (Step S203), the first half core W1 is positioned in the oriented magnetic field of the oriented magnetic field application device 23. That is, the half core W1 is disposed in a space surrounded by the oriented magnetic field application device 23 (in a cylindrical space having a length L).

Next, this manufacturing method includes a step of forming the open mold state (Step S204). The open mold state is achieved by moving the movable mold 21 in the negative X direction together with the half core W1 filled with the bonded-magnet material 71 as denoted by the arrows R7 in Fig. 7.

In the present embodiment, this step (Step S204) is preferably performed quickly after the bonded-magnet molding step for the first half core W1 (Step S203). That is, this step (Step S204) is preferably performed before the bonded-magnet material 71 is cured. Thus, it is possible to minimize time between the bonded-magnet molding step for the first half core W1 (Step S203) and a bonded-magnet molding step for the subsequent second half core W2 (Step S208). This technical significance will be described later in connection with the bonded-magnet molding step for the subsequent second half core W2 (Step S208).

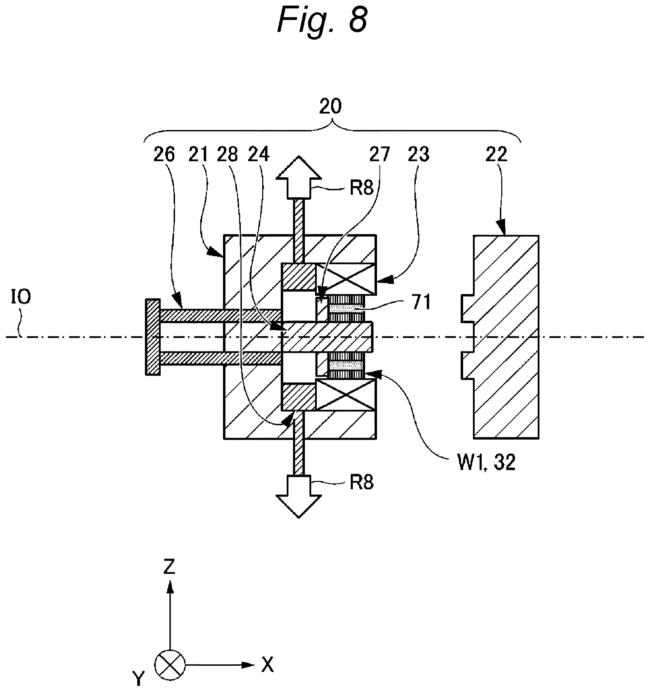

Next, this manufacturing method includes a next step of moving the slide spacer 28 to retracted positions on radially outer sides (Step S205). This step is achieved by sliding the slide spacer 28 to the retracted positions on the radially outer sides (for example, the vertical direction) as denoted by the arrows R8 in Fig. 8. Movement of the slide spacer 28 may be achieved by any actuator or may be achieved by using a robot hand such as the robot hand 40. Fig. 9 shows on the left side a state (spacer position) in which the slide spacer 28 functions as a spacer, and shows on the right side a state (retracted positions) in which the slide spacer 28 does not function as a spacer. In the example shown in Fig. 9, the slide spacer 28 has divided parts 281 and 282 that can be separated horizontally in the axial view. The divided parts 281 and 282 come into contact with each other in a horizontal direction at the spacer position. In this case, mating surfaces (contact surfaces) correspond to the XY plane. However, the mating surfaces are determined according to the sliding direction, and may be any surface including the axial direction. When mated, the divided parts 281 and 282 have a circular shape in the axial view. When mated, the divided parts 281 and 282 form an axial hole 284 through which the centering mechanism 24 passes. The slide spacer 28 may further include an engaging means for engaging the divided parts 281 and 282. As shown in Fig. 9, the engaging means may be a means for fitting a projection 2811 to a recess (or a hole) 2822 in the horizontal direction. By being moved in directions in which they separate from each other, the divided parts 281 and 282 can move from the spacer position to the retracted positions to change states thereof (refer to arrow R9). By being moved in directions in which they approach each other, the divided parts 281 and 282 can move from the retracted positions to the spacer position to change states thereof. A structure of the slide spacer 28 shown in Fig. 9 is merely an example, and various changes can be made. For example, divided parts 281A and 282A having a non-circular shape in the axial view when mated, such as a slide spacer 28A shown in Fig. 10, may be used.

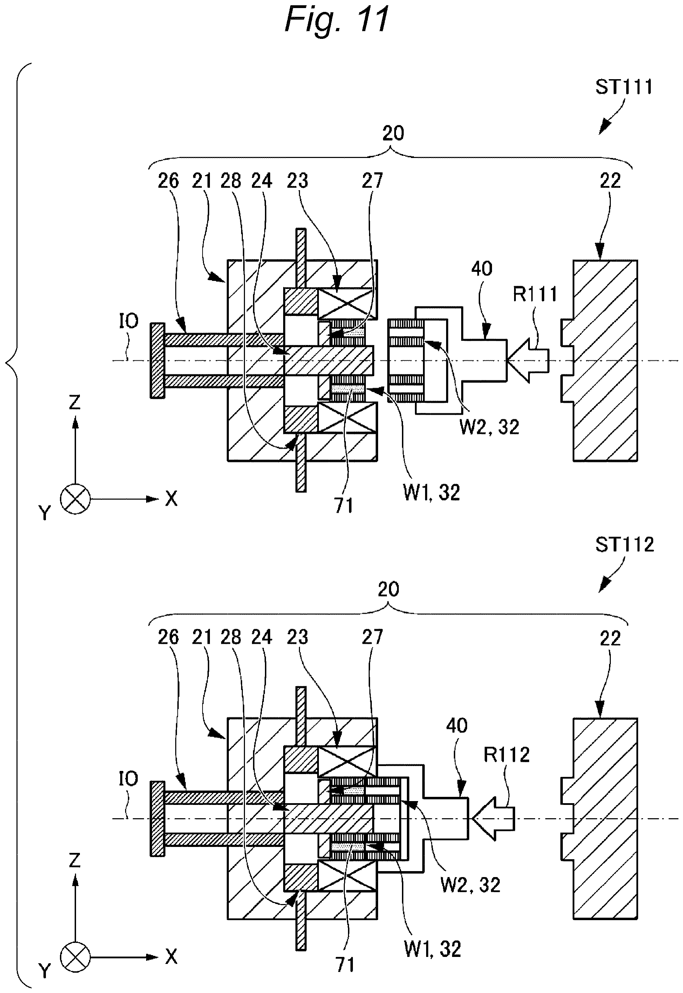

Next, this manufacturing method includes a step of setting the second half core W2 on the molding device 20 (Step S206). Similarly to the first half core W1, the second half core W2 is set on the molding device 20 while no bonded magnet is formed in the magnet arrangement hole 322W (that is, the magnet arrangement hole 322W is empty). In this set state, the half core W1 and the half core W2 are adjacent to each other in the axial direction. Phases of each magnet arrangement hole 322W of the half core W1 and each magnet arrangement hole 322W of the half core W2 are matched with each other. That is, each magnet arrangement hole 322W of the half core W1 and each magnet arrangement hole 322W of the half core W2 overlap each other in the axial view. In a modification, a slight shift may be positively set between the phase of each magnet arrangement hole 322W of the half core W1 and the phase of each magnet arrangement hole 322W of the half core W2. That is, each magnet arrangement hole 322W of the half core W1 and each magnet arrangement hole 322W of the half core W2 may partially overlap each other in the axial view. In this case also, each magnet arrangement hole 322W of the half core W1 and each magnet arrangement hole 322W of the half core W2 may be connected to each other in the axial direction (communicate with each other when there is no bonded-magnet material 71). Fig. 11 schematically shows with the arrow R111 and R112 movement from a state in which the half core W2 is gripped by the robot hand 40 (ST111) to a state (ST112) in which the half core W2 is set.

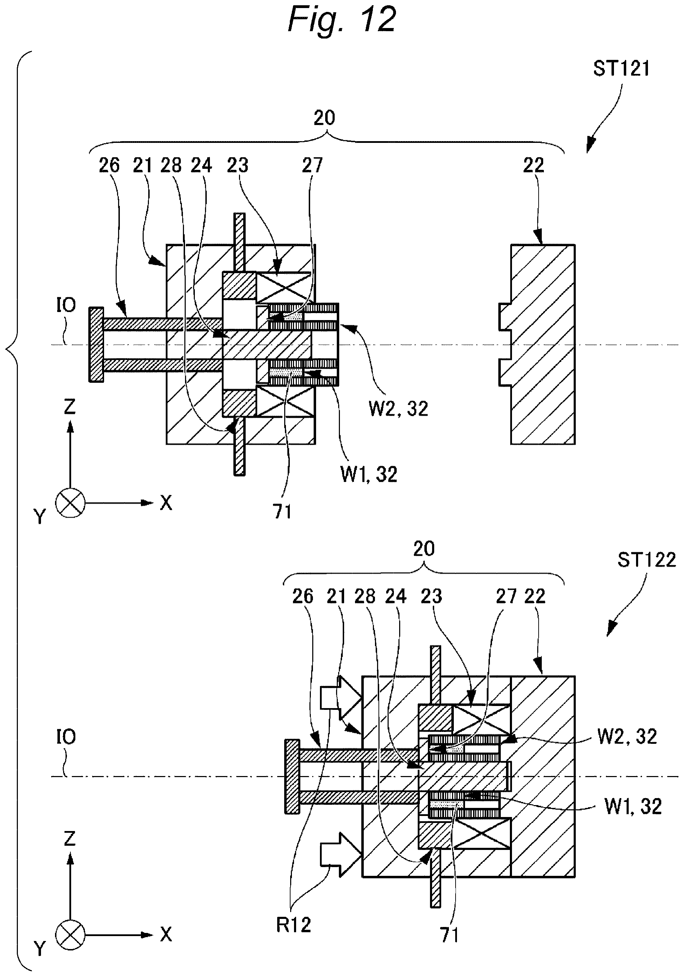

Next, this manufacturing method includes a step of forming the closed mold state of the molding device 20 while the second half core W2 is set (Step S207). As denoted by the arrow R112 in Fig. 12, the closed mold state can be achieved by moving the movable mold 21, in which the half core W1 and the half core W2 are set, in the positive X direction to a position at which the movable mold 21 is fit to the fixed mold 22.

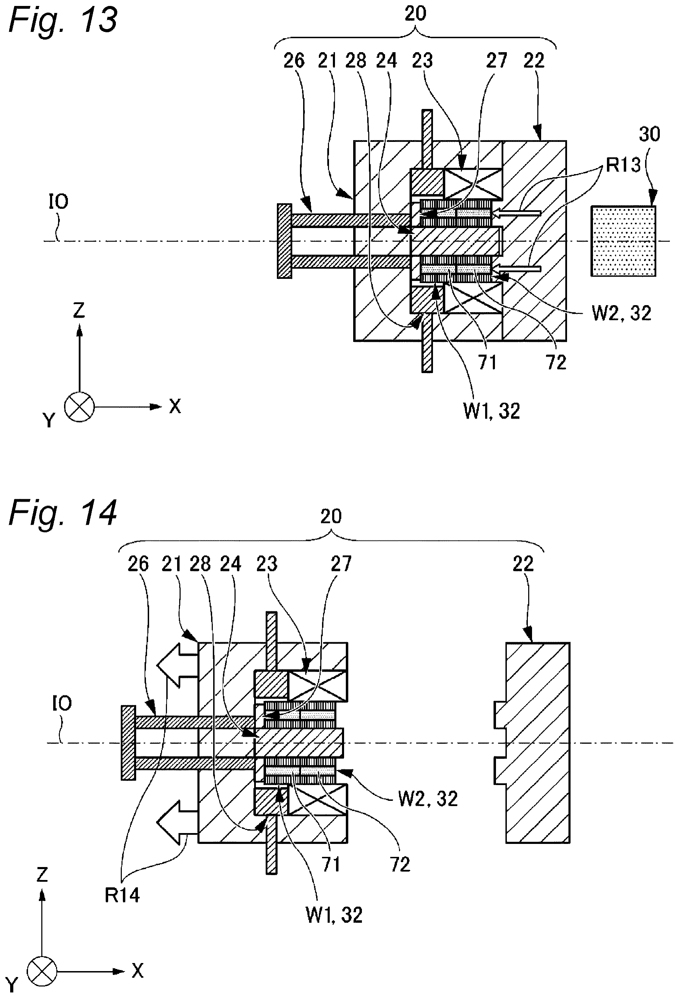

Next, this manufacturing method includes a bonded-magnet molding step for the second half core W2 (Step S208). This step may be performed similarly to the bonded-magnet molding step for the first half core W1 as described above (Step S203). The magnet arrangement hole 322W of the half core W2 is filled with the bonded-magnet material. Fig. 13 shows a bonded-magnet material 72 that fills the half core W2 (refer to arrows R13). A material of the bonded-magnet material 72 is identical to a material of the bonded-magnet material 71.

The bonded-magnet molding step for the second half core W2 (Step S208) is preferably performed in a state where the first half core W1 and half core W2 described above are adjacent to each other in the axial direction. Accordingly, the bonded-magnet material 72 can come into contact with the bonded-magnet material 71 before, during, or after curing. Thus, thereafter, when each of the bonded magnet material 72 and the bonded magnet material 71 is (completely) cured, both are substantially joined. Note that, in a case where the bonded-magnet material 72 comes into contact with a cured material of the bonded-magnet material 71, the bonded-magnet material 71 may melt by an end surface thereof (an end surface on a side in contact with the bonded-magnet material 72) receiving heat due to heat of the bonded-magnet material 72. Accordingly, even in a case where the bonded-magnet material 71 melts in this manner, the bonded-magnet material 71 and the bonded-magnet material 72 are substantially joined to each other at the time when both the bonded-magnet materials are cured. Hereinafter, the half core W1 and the half core W2 bonded to each other via the bonded-magnet material 71 and the bonded-magnet material 72 in this manner are also referred to as an "integrated core from the two half cores W1 and W2".

The bonded-magnet molding step for the second half core W2 (Step S208) is performed in a state where the oriented magnetic field is formed by the oriented magnetic field application device 23. In the bonded-magnet molding step for the second half core W2 (Step S208), the second half core W2 is positioned in the oriented magnetic field of the oriented magnetic field application device 23. In the present embodiment, although the axial length L of the oriented magnetic field application device 23 is shorter than an axial length of the integrated core from the two half cores W1 and W2, the second half core W2 can be positioned in the oriented magnetic field of the oriented magnetic field application device 23. This is because when the slide spacer 28 moves to the retracted positions, the half core W1 can move by an axial length of the slide spacer 28, axially outward (toward the movable mold 21) from a space of the oriented magnetic field. In this case, it is possible to downsize the oriented magnetic field application device 23 (and accordingly the rotating electrical machine rotor manufacturing apparatus 1) in the axial direction.

Next, this manufacturing method includes a step of forming the open mold state (Step S209). As denoted by the arrows R14 in Fig. 14, the open mold state is achieved by moving the movable mold 21 in the negative X direction, together with the integrated core from the two half cores W1 and W2.

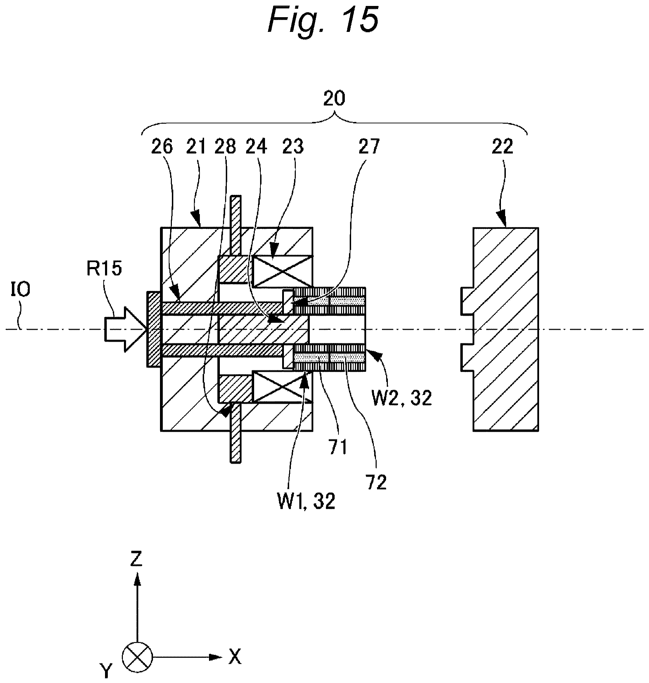

Next, this manufacturing method includes a step of extruding the integrated cores from the two half cores W1 and W2 with the ejector pin 26 (described as "EJ pin" in Fig. 2) (Step S210). Thus, as denoted by the arrow R15 in Fig. 15, at least a portion of the integrated core from the two half cores W1 and W2 is extruded out of the movable mold 21.

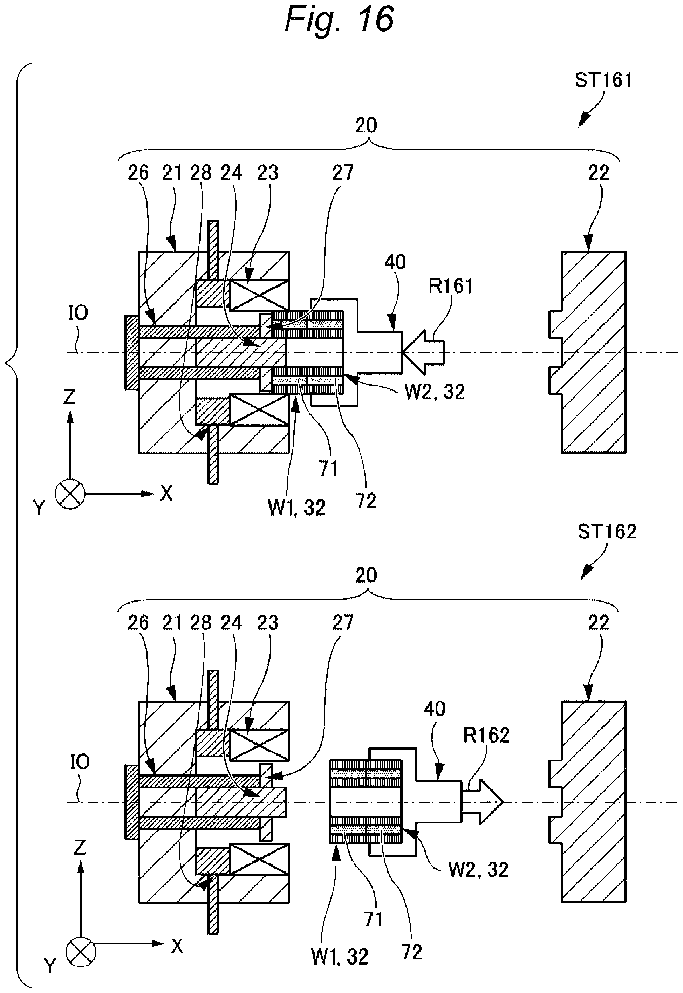

Next, this manufacturing method includes a step of removing the integrated core from the two half cores W1 and W2 with the robot hand 40 (Step S211). As shown in Fig. 16, as denoted by the arrow 161, the robot hand 40 approaches the movable mold 21 from the positive X direction (arrow R161) and grips the half core W2 (ST161). Then, the integrated core from the two half cores W1 and W2 can be removed by the robot hand 40 moving in a direction away from the movable mold 21 (arrow R162) (ST162).

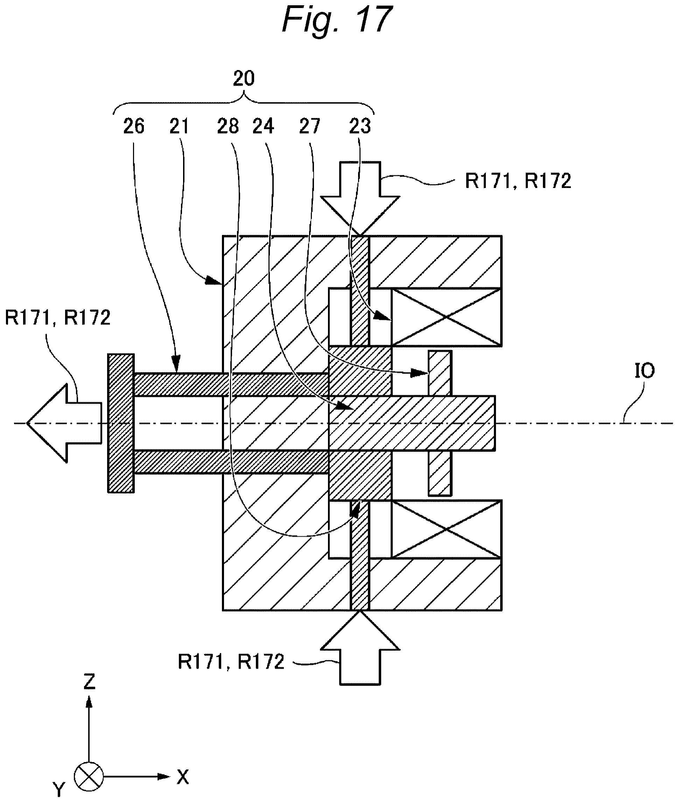

Thereafter, as denoted by the arrows R171 and R172 in Fig. 17, when the ejector pin 26 returns to an original position thereof and the slide spacer 28 returns to the spacer position, the rotating electrical machine rotor manufacturing apparatus 1 returns to a prepared state for a subsequent new workpiece W (state in which a process from step S201 can be started).

Here, as described above, if the axial length of the rotor core is relatively long, the axial length (flow length) at a time of injection-molding the bonded magnet is correspondingly long, making it difficult to form the bonded magnet.

In this regard, according to the present embodiment, the bonded-magnet material can be injection-molded separately for the two half cores W1 and W2 disposed to overlap each other in the axial direction. Therefore, the axial length (flow length) of one workpiece W can be relatively shortened.

A bonded magnet (resin component) contracts after molding. Therefore, in a configuration in which simply the bonded-magnet material is injection-molded separately for two half cores and the two half cores are bonded in the axial direction after being cured, an axial gap is easily formed between bonded magnets of the two half cores. Generation of such an axial gap causes a decrease in strength and torque.

In this regard, according to the present embodiment, as described above, in a state where the second half core W2 is disposed adjacent to the first half core W1 filled with the bonded-magnet material 71, the second half core W2 is filled with the bonded-magnet material 72. Thus, even if the bonded-magnet material 71 of the first half core W1 contracts or is cured before the second half core W2 is filled with the bonded-magnet material 72, the bonded-magnet material 72 that fills the second half core W2 can reach the recess or the like that may be formed by the contraction. As a result, an axial gap is less likely to be generated in the integrated core from the two half cores W1 and W2, and a high-quality bonded magnet can be formed. Similar applies to a case where the first half core W1 is temporarily removed and set again while being adjacent to the half core W2 (a case of a modification not shown). In this case also, the bonded-magnet material 72 that fills the second half core W2 can reach a recess, such as a gate mark, on the first half core W1. As a result, an axial gap is less likely to be generated in the integrated core from the two half cores W1 and W2, and a high-quality bonded magnet can be formed.

In the present embodiment, the bonded-magnet molding step for the second half core W2 (Step S208) is preferably performed before the bonded-magnet material 71, which fills the first half core W1 in the bonded-magnet molding step (Step S203) described above, is completely cured. This facilitates bonding between the bonded-magnet material 71 and the bonded-magnet material 72, allowing the bonded-magnet material 71 and the bonded-magnet material 72 to be more firmly bonded to each other. That is, a bonded magnet of the rotor core 320 can be formed such that a gap or the like is not substantially generated at a joint portion between an axial end surface (an end surface on a positive X-direction side) of the bonded-magnet material 71 and an axial end surface (an end surface on a negative X-direction side) of the bonded-magnet material 72. Furthermore, it is possible to homogenize magnet composition between the bonded-magnet material 71 and the bonded-magnet material 72.

### [Second embodiment]

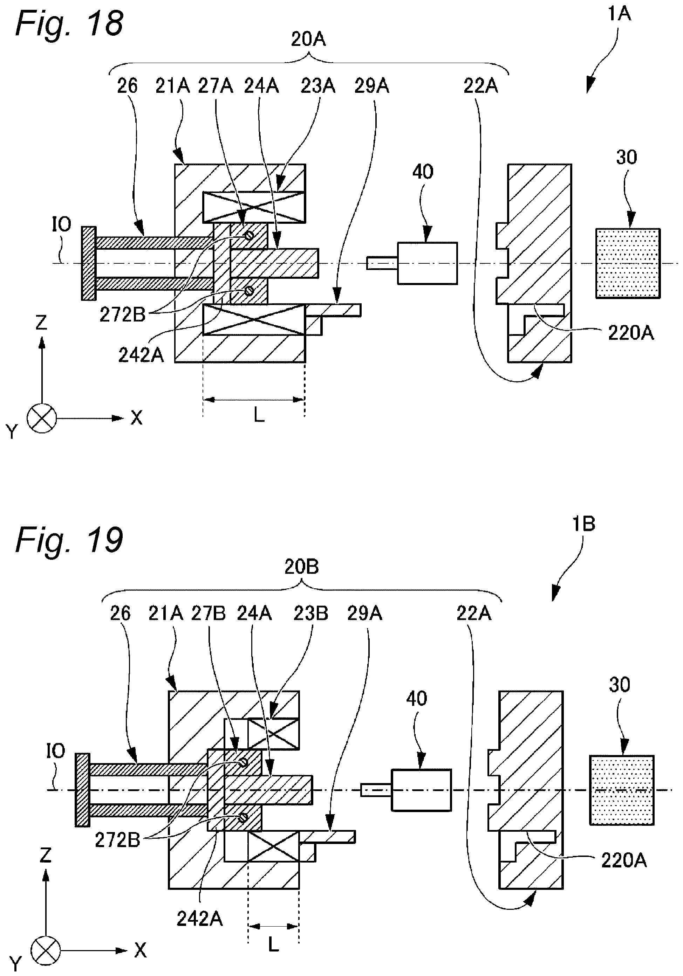

Next, the second embodiment will be described with reference to Fig. 18 and subsequent drawings. In the following description of the second embodiment, components that may be similar to those of the first embodiment described above are denoted by the same reference signs, and description thereof may be omitted.

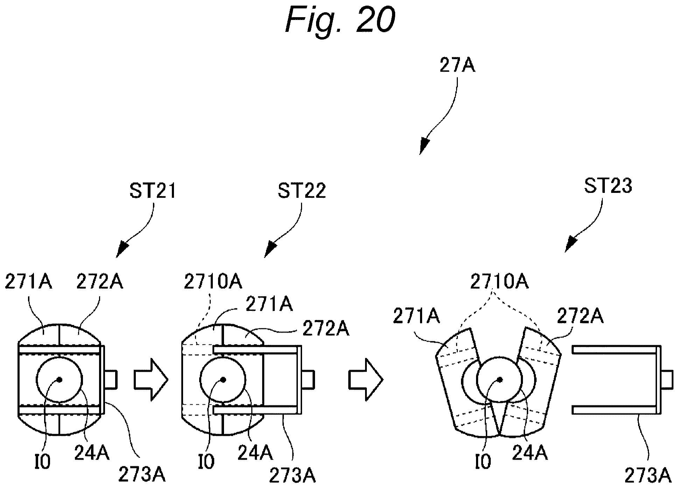

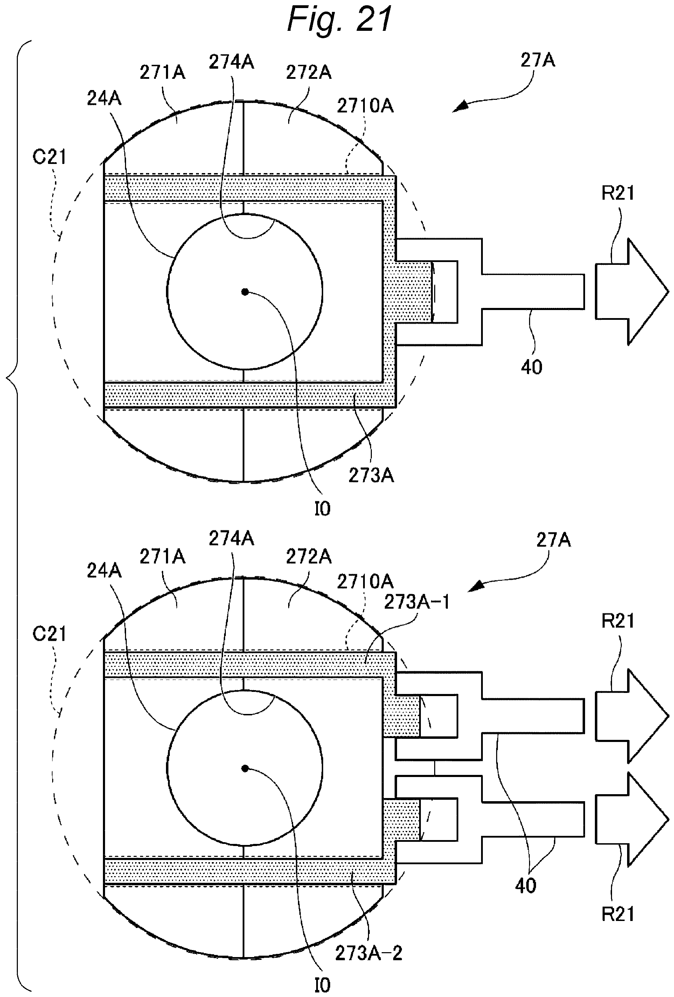

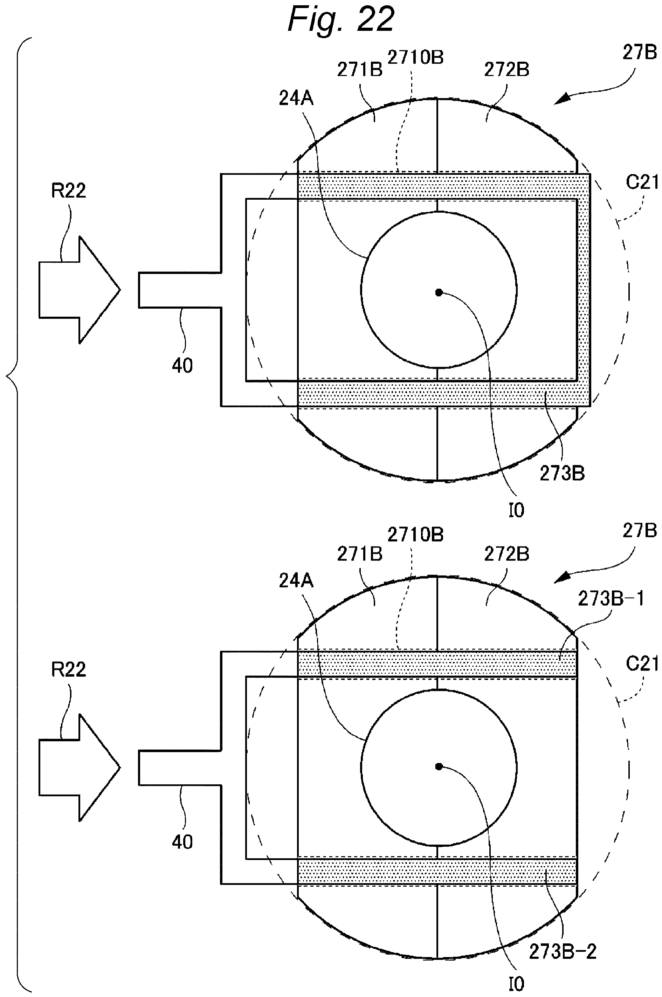

Fig. 18 is a schematic view showing a rotating electrical machine rotor manufacturing apparatus 1A according to the second embodiment. Fig. 18 shows the rotating electrical machine rotor manufacturing apparatus 1A in a cross-sectional view taken along a plane passing through a central axis I0. However, an injection molding machine 30 is schematically shown in a form of a block diagram. Fig. 19 is an explanatory view of a modification of the second embodiment, schematically showing a cross-sectional view similar to Fig. 18. Fig. 20 is an explanatory view of a movable spacer 27A, showing movement (each state) of the movable spacer 27A in an axial view. Figs. 21 and 22 are explanatory views each showing, along with an explanatory view of movement of a robot hand 40 with respect to the movable spacer 27A, another modification of the movable spacer 27A.

The rotating electrical machine rotor manufacturing apparatus 1A according to the present embodiment is different from the rotating electrical machine rotor manufacturing apparatus 1 according to the first embodiment described above, mainly in that the molding device 20 is replaced with a molding device 20A.

The molding device 20A according to the present embodiment is different from the molding device 20 according to the first embodiment described above in that the movable mold 21, the fixed mold 22, the oriented magnetic field application device 23, the centering mechanism 24, and the movable spacer 27 are replaced with a movable mold 21A, a fixed mold 22A, an oriented magnetic field application device 23A, a centering mechanism 24A, and the movable spacer 27A, respectively. The molding device 20A is different from the molding device 20 according to the first embodiment described above in that a slide spacer 28 is not included and a temporary receiving part 29A is added.

The movable mold 21A is the same in functions as the movable mold 21 according to the first embodiment described above, but has formal differences due to differences regarding other components described above (for example, including or not including the slide spacer 28).

The fixed mold 22A is also the same in functions as the fixed mold 22 according to the first embodiment described above, but is different in having a relief hole 220A to avoid interference with the temporary receiving part 29A in a closed mold state. Note that, in a case where the temporary receiving part 29A is detachable, the relief hole 220A may not be formed.

In the present embodiment, a direction in which a mold opens and closes is preferably a horizontal direction in order to achieve movement (falling) of the movable spacer 27A, which will be described later.

The oriented magnetic field application device 23A is also the same in functions as the oriented magnetic field application device 23 according to the first embodiment described above, but is different in that a length L of the oriented magnetic field application device 23A is long enough to simultaneously apply an oriented magnetic field to two half cores W1 and W2. However, as in a rotating electrical machine rotor manufacturing apparatus 1B according to the modification shown in Fig. 19, an oriented magnetic field application device 23B having an axial length significantly shorter than a total axial length of the two half cores W1 and W2 may be used. In this case, it is possible to downsize the oriented magnetic field application device 23A (and accordingly the rotating electrical machine rotor manufacturing apparatus 1A) in an axial direction.

The centering mechanism 24A is also the same in functions as the centering mechanism 24 according to the first embodiment described above, but has, in the centering mechanism 24, formal differences due to differences regarding other components described above. Specifically, for example, the centering mechanism 24A is different in that, instead of the movable spacer 27, the movable spacer 27A can be supported movably in an axial direction. The centering mechanism 24A is different in being movable in the axial direction together with an ejector pin 26. The centering mechanism 24A is different in including a seat 242A that transmits clamping force to the molding device 20A. The seat 242A may be bonded to a tip of the ejector pin 26.

The movable spacer 27A is similar in function to the movable spacer 27 according to the first embodiment described above, but is different in detail. Specifically, the movable spacer 27A is detachable from the centering mechanism 24A during a manufacturing process.

In the present embodiment, the movable spacer 27A includes divided parts 271A and 272A that can be separated horizontally in the axial view. The divided parts 271A and 272A can be mated in the horizontal direction, and in this case, mating surfaces correspond to an XZ plane. When mated, the divided parts 271A and 272A form an axial hole 274A through which the centering mechanism 24A passes. The movable spacer 27A further includes an engagement tool 273A for temporarily engaging the divided parts 271A and 272A. The engagement tool 273A passes through a hole 2710A continuously penetrating each of the divided parts 271A and 272A that are mated, thereby maintaining the mated state of the divided parts 271A and 272A. The holes 2710A are provided in pairs above and below with the centering mechanism 24A interposed therebetween. The hole 2710A extends in a Y direction (horizontal direction) in the XY plane. In this case, when the engagement tool 273A is removed from the hole 2710A, the divided parts 271A and 272A can be separated from each other in the horizontal direction. The robot hand 40 can achieve operation of removing the engagement tool 273A (refer to Fig. 21).

When the divided parts 271A and 272A are mated, an outer shape of the movable spacer 27A (outer shape including the engagement tool 273A) is a shape that fits within a reference circle C21 (refer to Fig. 21 and the like) in the axial view. In this case, the reference circle C21 is a circle centered on the central axis I0, and corresponds to an outer shape of a space (space radially inside the oriented magnetic field application device 23B) that is movable in the axial direction without interfering with the oriented magnetic field application device 23B.

Here, the movable spacer 27A is used, but another movable spacer having functions similar to functions of the movable spacer 27A may be used. For example, as shown in the lower part of Fig. 21, the engagement tool 273A may be formed of two pieces separated vertically in the modification. In this case, the two pieces may be handled separately by the robot hand 40, or two robot hands 40 may be used. The engagement tool 273A is a pull-out type, but may be a type in which divided parts 271B and 272B can be separated by being extruded (refer to the arrows R22) as shown in Fig. 22. In Fig. 22, the upper side shows a type in which engagement tools 273B are vertically connected, and the lower side shows a type in which engagement tools 273B are vertically separated (two-piece type).

Further characteristics (movement and the like) of the movable spacer 27A during the manufacturing process will be described later in connection with a manufacturing method.

The temporary receiving part 29A has a function of temporarily supporting the half core W1 while allowing the movable spacer 27A to be detached from the centering mechanism 24A during the manufacturing process. These characteristics will be described later in connection with the manufacturing method. In the modification, a part or whole of the temporary receiving part 29A may be detachable from the movable mold 21A.

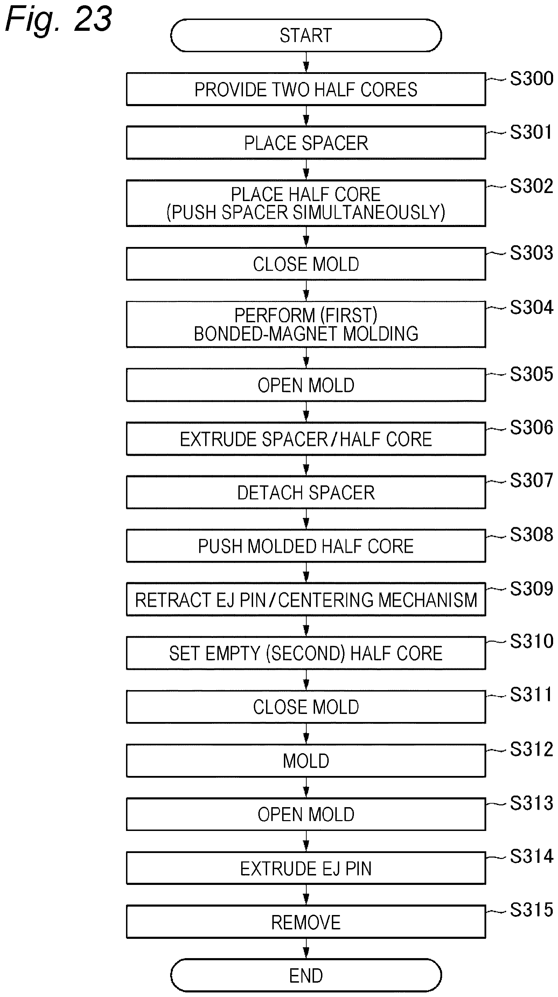

Next, a rotating electrical machine rotor manufacturing method according to the present embodiment, the method using the rotating electrical machine rotor manufacturing apparatus 1A, will be described with reference to Figs. 23 to 41.

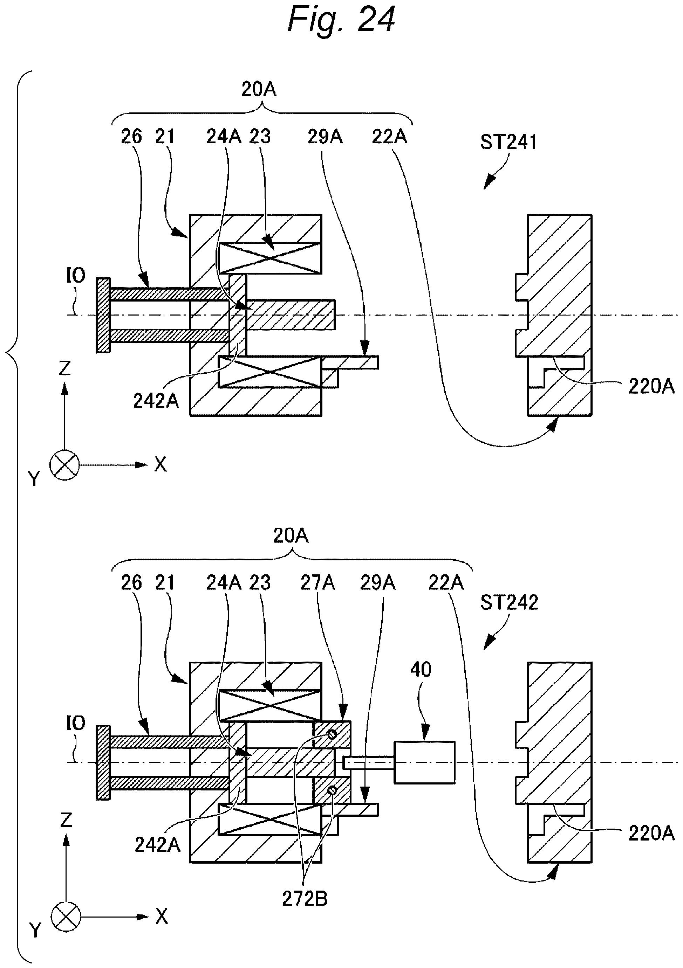

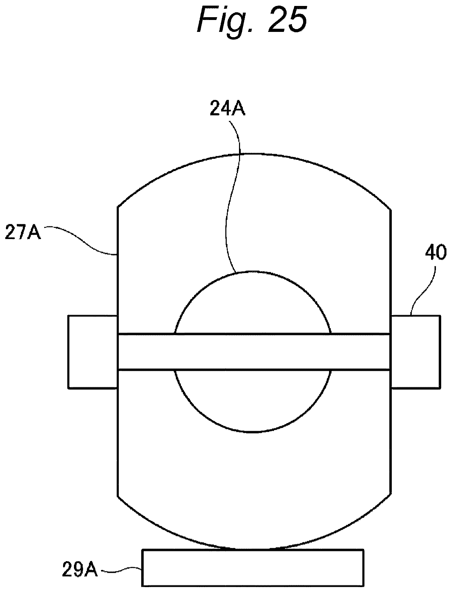

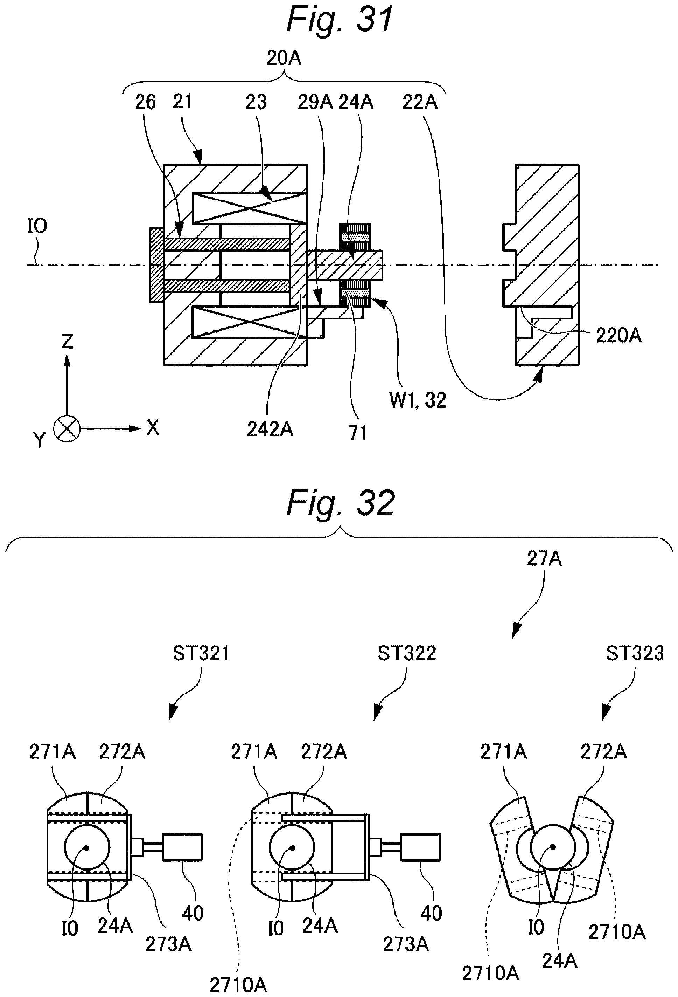

Fig. 23 is a schematic flowchart showing a flow of the rotating electrical machine rotor manufacturing method according to the present embodiment. Figs. 24 and subsequent drawings are explanatory views of each state in this manufacturing method. Figs. 24, 26 to 31, and 33 to 41 are side views showing a relation between the rotating electrical machine rotor manufacturing apparatus 1A and a workpiece W in a side view similar to Fig. 23. Fig. 25 is a view showing a gripping posture of the robot hand 40. Fig. 32 is an explanatory view of a step of detaching the movable spacer 27A.

This manufacturing method first includes a step of providing two workpieces W for forming one rotor core (Step S300). In this manufacturing method also, the two workpieces W are the half cores W1 and W2 described above.

Next, this manufacturing method includes a step of setting the movable spacer 27A on the molding device 20A (Step S301). That is, a state in which the centering mechanism 24A is made pass through the axial hole 274A is formed while the movable spacer 27A is maintained in a mated state. In the example shown in Fig. 24, in an open mold state (ST241), a state (ST242) in which the movable spacer 27A is set by the robot hand 40 is formed. In this manufacturing method, a posture (orientation) of the robot hand 40 is appropriately rotated as shown in Fig. 25 so that the temporary receiving part 29A and the robot hand 40 do not interfere with each other. That is, the robot hand 40 operates such that a gripping direction is the horizontal direction. Such a posture of the robot hand 40 is similar in a next step (Step S302) and the like.

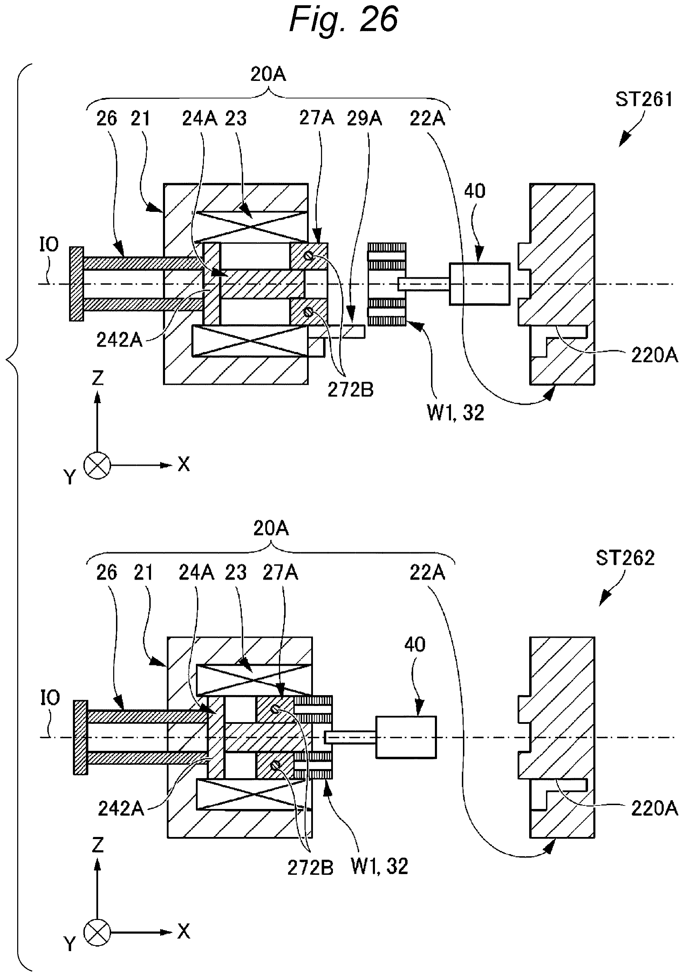

Next, this manufacturing method includes a step of setting the first half core W1 on the molding device 20A (Step S302). Fig. 26 shows explanatory views of this step in a chronological order from top. The half core W1 is gripped by the robot hand 40 (ST261), and is set on the molding device 20A so as to be centered by the centering mechanism 24A (ST262). At this time, the central axis I0 of the centering mechanism 24A and a central axis I1 of the half core W1 coincide with each other. At this time, the half core W1 is set on the molding device 20A while no bonded magnet is formed in the magnet arrangement hole 322W (that is, the magnet arrangement hole 322W is empty).

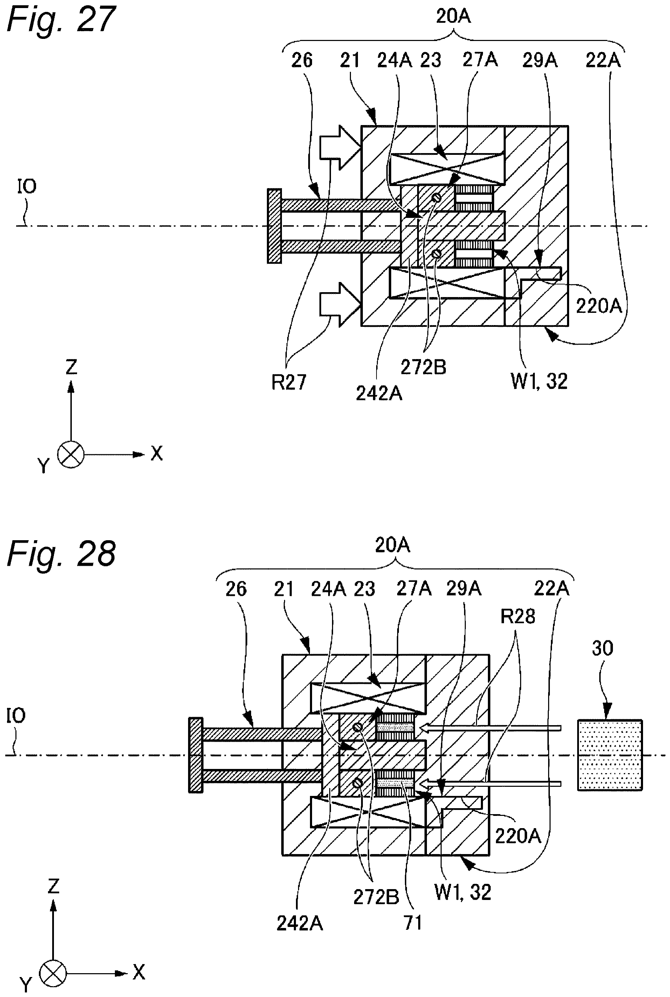

Next, this manufacturing method includes a step of forming a closed mold state of the molding device 20A while the first half core W1 is set (Step S303). In this case, as denoted by the arrows R27 in Fig. 27, the movable mold 21 moves in a positive X direction to a position where the movable mold 21 is fit to the fixed mold 22A, by which a closed mold state is formed.

Next, this manufacturing method includes a bonded-magnet molding step for the first half core W1 (Step S304). This step may be substantially similar to the bonded-magnet molding step for the first half core W1 (Step S203) according to the first embodiment described above. Fig. 28 schematically shows with the arrows R28 a state of filling with a bonded-magnet material 71.

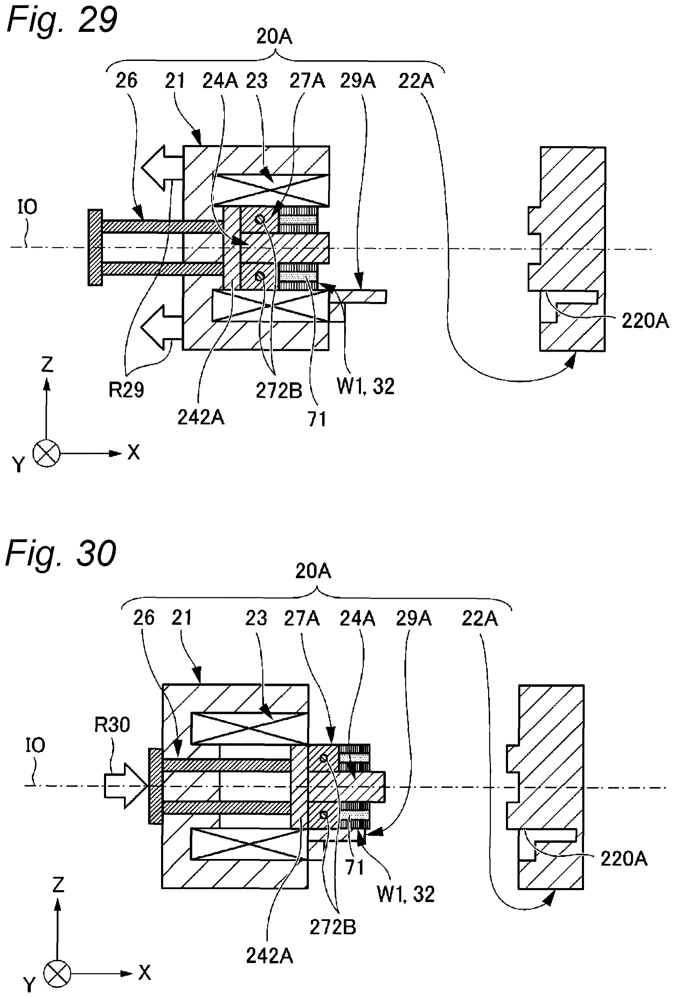

Next, this manufacturing method includes a step of forming the open mold state (Step S305). The open mold state is achieved by moving the movable mold 21 in a negative X direction together with the half core W1 filled with the bonded-magnet material 71 as denoted by the arrows R29 in Fig. 29. In the present embodiment also, similarly to the embodiment described above, this step (Step S305) is preferably performed quickly after the bonded-magnet molding step for the first half core W1 (Step S304).

Next, this manufacturing method includes a step of simultaneously extruding the half core W1 and the movable spacer 27A with the ejector pin 26 (Step S306). Fig. 30 schematically shows with the arrow R30 a state in which the half core W1 and the movable spacer 27A are extruded. The half core W1 and the movable spacer 27A may be extruded until the movable spacer 27A comes out of the movable mold 21. At this time, the half core W1 is supported by the temporary receiving part 29A.

Next, this manufacturing method includes a step of detaching the movable spacer 27A (Step S307). Fig. 31 shows a state after the movable spacer 27A is detached. As shown in Fig. 32, when the engagement tool 273A is pulled out by using the robot hand 40, the movable spacer 27A in a state ST321 is broken as denoted by ST323 in the axial view. Then, the divided parts 271A and 272A fall from the temporary receiving part 29A by the action of gravity.

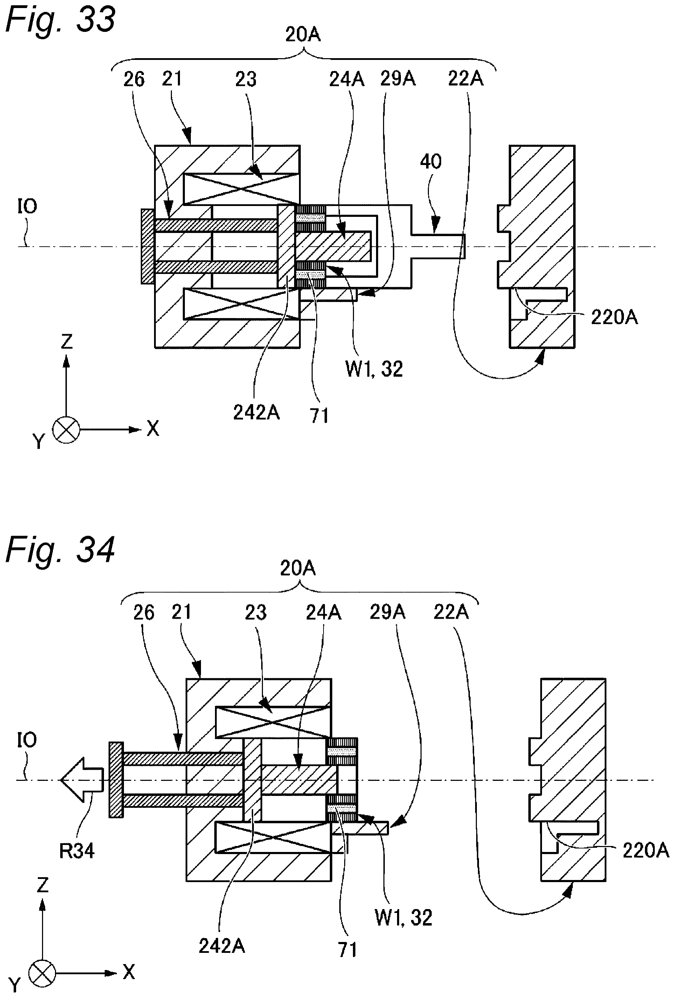

Next, this manufacturing method includes a step of pushing the half core W1 in the negative X direction by using a space in the axial direction formed by detaching the movable spacer 27A (Step S308). In the example shown in Fig. 33, the half core W1 is pushed in the negative X direction by using the robot hand 40.

Next, this manufacturing method includes a step of retracting (moving in the negative X direction) the ejector pin 26 and the centering mechanism 24A (Step S309). Fig. 34 shows a state after the retraction. In this manufacturing method, as denoted by the arrow R34 in Fig. 34, the ejector pin 26 and the centering mechanism 24A are retracted to such an extent that the half core W1 does not come off the centering mechanism 24A. In other words, in this step (Step S309), an axial length of the centering mechanism 24A may be adjusted so that the seat 242A can be returned to a position where the seat 242A comes into contact with the movable mold 21A in the axial direction while the centering mechanism 24A holds the half core W1 being centered.

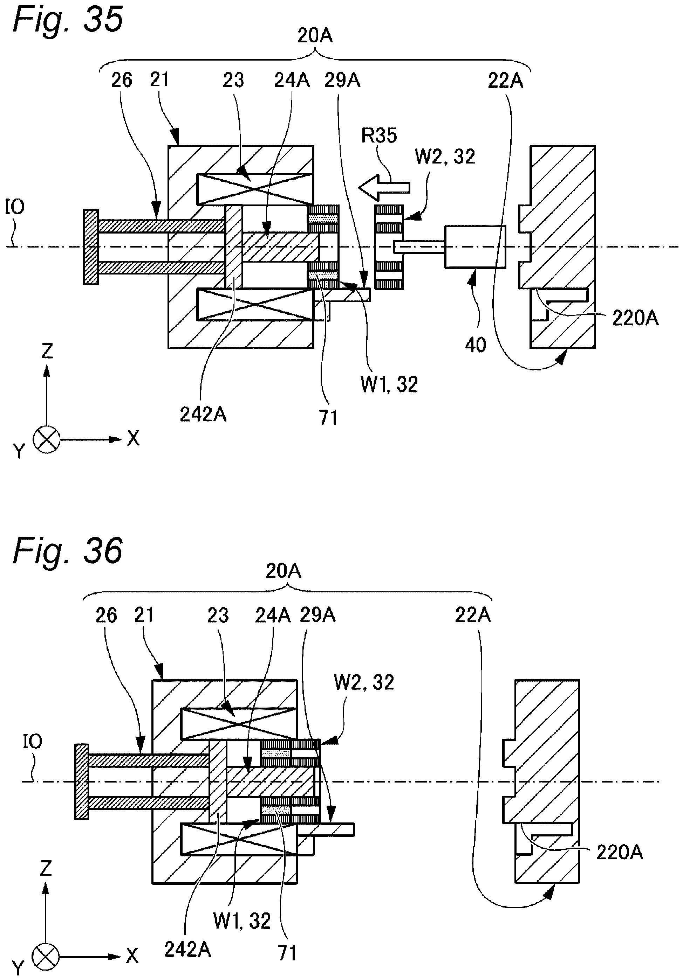

Next, this manufacturing method includes a step of setting the second half core W2 on the molding device 20A (Step S310). In Fig. 35, a state in which the half core W2 is set by using the robot hand 40 is also denoted by the arrow R35. Similarly to the first half core W1, the second half core W2 is set on the molding device 20A while no bonded magnet is formed in the magnet arrangement hole 322W (that is, the magnet arrangement hole 322W is empty). In this set state, the half core W1 and the half core W2 are adjacent to each other in the axial direction. Phases of each magnet arrangement hole 322W of the half core W1 and each magnet arrangement hole 322W of the half core W2 are matched with each other. That is, each magnet arrangement hole 322W of the half core W1 and each magnet arrangement hole 322W of the half core W2 are connected to each other in the axial direction. In a modification, a slight shift may be positively set between the phase of each magnet arrangement hole 322W of the half core W1 and the phase of each magnet arrangement hole 322W of the half core W2. In this case also, each magnet arrangement hole 322W of the half core W1 and each magnet arrangement hole 322W of the half core W2 may be connected to each other in the axial direction.

In this manufacturing method, a step of setting the second half core W2 on the molding device 20A (Step S310) may include pushing the half core W2 together with the half core W1 until the half core W2 is centered by the centering mechanism 24A as shown in Fig. 36.

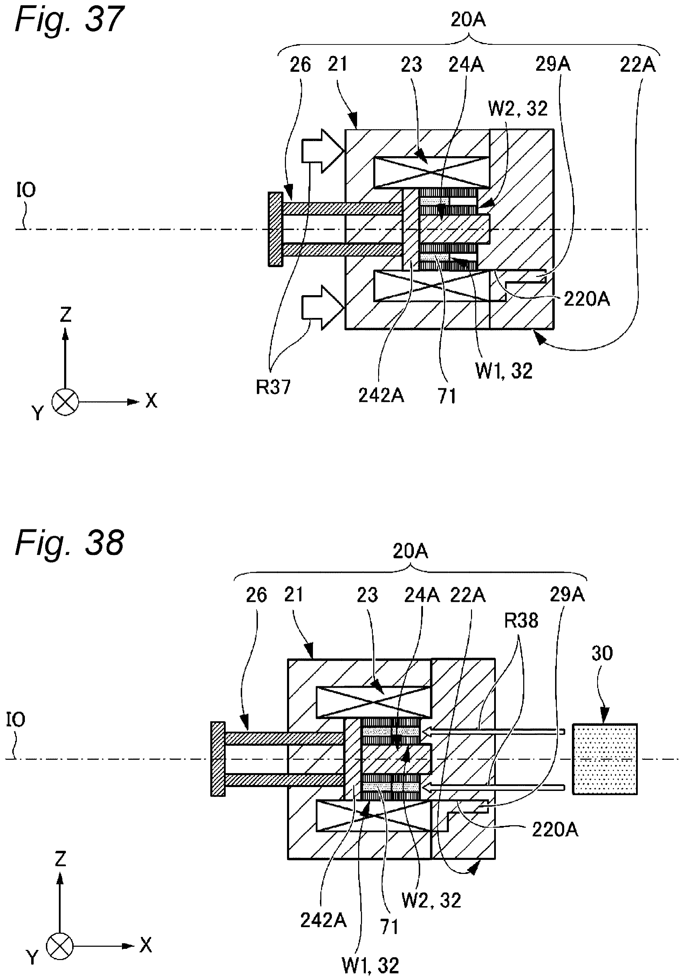

Next, this manufacturing method includes a step of forming a closed mold state of the molding device 20A while the second half core W2 is set (Step S311). As denoted by the arrows R37 in Fig. 37, the closed mold state can be achieved by moving the movable mold 21A, in which the half core W1 and the half core W2 are set, in the positive X direction to a position at which the movable mold 21A is fit to the fixed mold 22A.

Next, this manufacturing method includes a bonded-magnet molding step for the second half core W2 (Step S312). This step may be substantially similar to the bonded-magnet molding step for the second half core W2 (Step S208) according to the first embodiment described above. Fig. 38 schematically shows with the arrows R38 a state of filling with a bonded-magnet material 72.

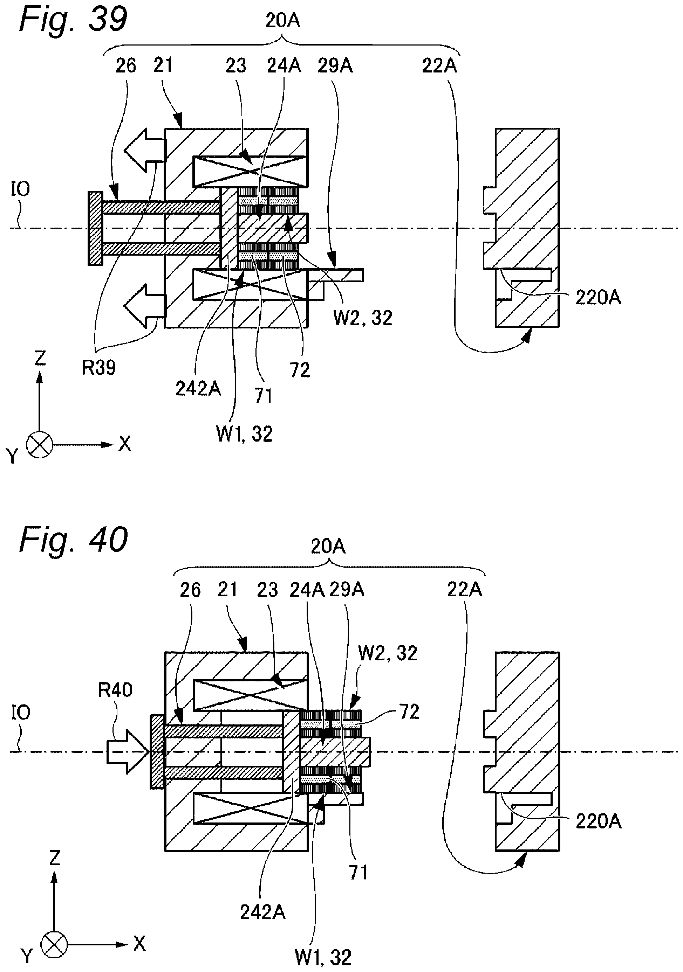

Next, this manufacturing method includes a step of forming the open mold state (Step S313). As denoted by the arrows R39 in Fig. 39, the open mold state is achieved by moving the movable mold 21A in the negative X direction, together with an integrated core from the two half cores W1 and W2.

Next, this manufacturing method includes a step of extruding the integrated cores from the two half cores W1 and W2 with the ejector pin 26 (described as "EJ pin" in Fig. 23) (Step S314). Thus, as denoted by the arrow R40 in Fig. 40, at least a portion of the integrated core from the two half cores W1 and W2 is extruded out of the movable mold 21A.

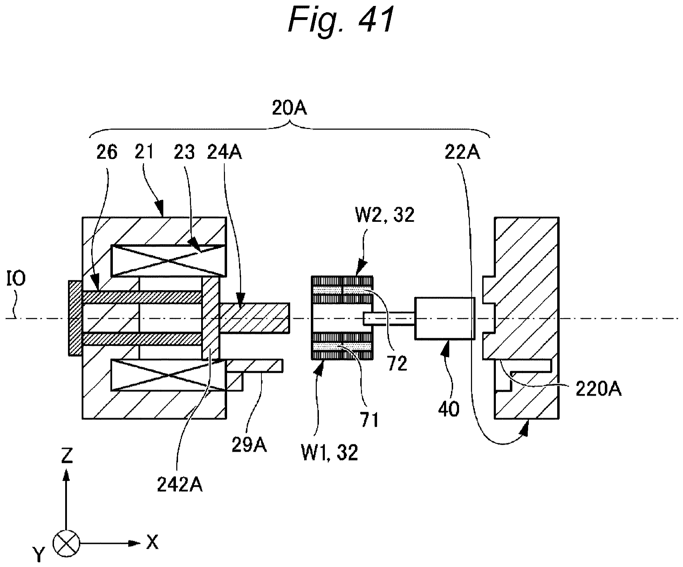

Next, this manufacturing method includes a step of removing the integrated core from the two half cores W1 and W2 by the robot hand 40 (Step S315). In the example shown in Fig. 41, the integrated core from the two half cores W1 and W2 is removed by the robot hand 40.

This manufacturing method has effects similar to effects of the manufacturing method according to the first embodiment described above.

Finally, a characteristic configuration of a rotor core 320 manufactured with the manufacturing method according to the first embodiment or the second embodiment described above will be described with reference to Fig. 42.

Fig. 42 is a schematic cross-sectional view of the rotor core 320 including a bonded magnet 70. In the present embodiment, the rotor core 320 including the bonded magnet 70 is manufactured with a manufacturing method described above. As described above, the bonded magnet 70 is formed by filling the half core W2 with the bonded-magnet material 72 in a state where the half cores W1 and W2 are adjacent to each other in the axial direction. Thus, a gap or the like is not substantially generated in the joint portion 80. In this way, according to the present embodiment, even if an axial length of the rotor core 320 is made relatively long, good quality of the bonded magnet 70 can be ensured.

Although each embodiment has been described in detail above, this disclosure is not limited to a specific embodiment, and various modifications and changes can be made within the scope described in the claims. Furthermore, all or a plurality of the components in the above-described embodiments can be combined.

For example, although the rotor core 320 is formed by using the half cores W1 and W2 in the embodiments described above, the manufacturing method according to the embodiments described above can also be used in a case where a rotor core is formed with three or more of cores continuing in an axial direction.

With regard to the disclosure described above, the following are further disclosed.

### [Supplementary note 1]

A rotating electrical machine rotor manufacturing method including
a step of providing a first core and a second core, each having an axis and a magnet arrangement hole,
a first setting step of setting the first core on a molding device,
a first filling step of, after the first setting step, filling the magnet arrangement hole of the first core with an injection molding material including magnetic powder,
a second setting step of, after the first filling step, setting the second core together with the first core on the molding device in a state where the second core is adjacent to the first core in an axial direction, and
a second filling step of, after the second setting step, filling the magnet arrangement hole of the second core with the injection molding material.

### [Supplementary note 2]

The rotating electrical machine rotor manufacturing method according to Supplementary note 1, in which the second filling step is performed before the injection molding material that fills the first core is completely cured.

### [Supplementary note 3]

The rotating electrical machine rotor manufacturing method according to Supplementary note 1 or 2 in which
the molding device includes a centering mechanism that forms a centered state of the first core and the second core on the basis of axial holes for the axes of the first core and of the second core, and
the first filling step and the second filling step are performed by using same the centering mechanism while maintaining a state where the first core is centered by the centering mechanism after the first filling step.

### [Supplementary note 4]

The rotating electrical machine rotor manufacturing method according to any one of Supplementary notes 1 to 3 in which
the molding device includes an axial spacer, and
the first filling step is performed in a state where the spacer is adjacent to the first core in an axial direction.

### [Supplementary note 5]

The rotating electrical machine rotor manufacturing method according to Supplementary note 4 in which
the second setting step includes retracting the spacer to a retracted position at which the spacer does not overlap the first core in an axial view.

### [Supplementary note 6]

The rotating electrical machine rotor manufacturing method according to any one of Supplementary notes 1 to 5 in which
the molding device includes an orientation device that is able to form an oriented magnetic field,
an axial length of an effective area of the oriented magnetic field is shorter than a total of an axial length of the first core and an axial length of the second core,
the first filling step is performed in a state where the first core is included in the axial range of the effective area of the oriented magnetic field, and
the second filling step is performed in a state where the second core is included in the axial range of the effective area of the oriented magnetic field.

### [Supplementary note 7]

The rotating electrical machine rotor manufacturing method according to any one of Supplementary notes 1 to 6, in which
the second filling step includes bringing the injection molding material that fills the first core and the injection molding material that fills the magnet arrangement hole of the second core into contact with each other.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A rotating electrical machine rotor manufacturing method comprising:
a step of providing a first core (W1) and a second core (W2), each having an axis and a magnet arrangement hole (322W);
a first setting step of setting the first core (W1) on a molding device (20A);
a first filling step of, after the first setting step, filling the magnet arrangement hole (322W) of the first core (W1) with an injection molding material (71, 72) including magnetic powder;
a second setting step of, after the first filling step, setting the second core (W2) together with the first core (W1) on the molding device (20A) in a state where the second core (W2) is adjacent to the first core (W1) in an axial direction; and
a second filling step of, after the second setting step, filling the magnet arrangement hole (322W) of the second core (W2) with the injection molding material (71, 72).

2. The rotating electrical machine rotor manufacturing method according to Claim 1, the method comprising performing the second filling step before the injection molding material (71, 72) that fills the first core (W1) is completely cured.

3. The rotating electrical machine rotor manufacturing method according to Claim 1 or 2, wherein
the second setting step includes bringing the second core (W2) adjacent to the first core (W1) in an axial direction in a state where the magnet arrangement hole (322W) of the first core (W1) and the magnet arrangement hole (322W) of the second core (W2) partially overlap in an axial view.

4. The rotating electrical machine rotor manufacturing method according to Claim 1 or 2, wherein
the second setting step includes bringing the second core (W2) adjacent to the first core (W1) in an axial direction in a state where the magnet arrangement hole (322W) of the first core (W1) and the magnet arrangement hole (322W) of the second core (W2) overlap in an axial view.

5. The rotating electrical machine rotor manufacturing method according to any one of Claims 1 to 4, wherein
the molding device (20A) includes an orientation device (23, 23A, 23B) that is able to form an oriented magnetic field,
an axial length of an effective area of the oriented magnetic field is shorter than a total of an axial length of the first core (W1) and an axial length of the second core (W2),
the first filling step is performed in a state where the first core (W1) is included in the axial range of the effective area of the oriented magnetic field, and
the second filling step is performed in a state where the second core (W2) is included in the axial range of the effective area of the oriented magnetic field.

6. A rotating electrical machine rotor comprising:
a core (320) having an axis and a magnet arrangement hole (322W); and
a permanent magnet disposed in the magnet arrangement hole (322W), wherein
the permanent magnet includes a cured material of an injection molding material (71, 72) including magnetic powder, and
the cured material includes a joint portion (80) aligned in an axial direction at a position axially inward with respect to an axial end in the magnet arrangement hole (322W).
